# EUROPÄISCHE PATENTSCHRIFT

(11) **EP 4 166 304 B1**
(45) Veröffentlichungstag und Bekanntmachung des Hinweises auf die Patenterteilung: **26.06.2024**
(21) Anmeldenummer: 22212198.0
(22) Anmeldetag: 16.12.2020
(51) Int. Cl.: B29C 49/42, B29C 49/06, B29C 49/46, B29L 31/00, B29C 49/64

(54) **VORRICHTUNG UND VERFAHREN ZUM BEHANDELN VON KUNSTSTOFFVORFORMLINGEN MIT INTEGRIERTER VORFORMLINGZUFÜHRUNG**
DEVICE AND METHOD FOR TREATING PLASTIC PREFORMS, COMPRISING AN INTEGRATED PREFORM SUPPLY
DISPOSITIF ET PROCÉDÉ DE TRAITEMENT D'ÉBAUCHES EN PLASTIQUE AVEC ALIMENTATION INTÉGRÉE DES PRÉFORMES

(30) Priorität: 10.03.2020 DE 102020106422
(43) Veröffentlichungstag der Anmeldung: 19.04.2023
(62) Teilanmeldung aus: 20000473.7
(73) Patentinhaber: Krones AG, 93073 Neutraubling (DE)
(72) Erfinder: Geltinger, Florian, 93073 Neutraubling (DE)
(74) Vertreter: Hannke Bittner & Partner mbB Regensburg

(56) Entgegenhaltungen:
- WO-A1-2017/173477
- WO-A1-2020/011497
- DE-U1- 20 308 513
- FR-A1- 2 556 273

## Beschreibung

Die vorliegende Erfindung bezieht sich auf eine Vorrichtung zum Behandeln von Kunststoffvorformlingen mit einer Vorformlingsortiereinrichtung und einer Heizeinrichtung. Derartige Vorrichtungen sind aus dem Stand der Technik seit langem bekannt. Die Kunststoffvorformlinge werden dabei üblicherweise, vor der Umformung zu Kunststoffbehältnissen, ungeordnet einer Vorformlingsortiereinrichtung zugeführt, dort in die gewünschte Ausrichtung gebracht und anschließend in der richtigen bzw. der vorbestimmten Ausrichtung einer nachfolgenden Einrichtung, wie beispielsweise einer Heizeinrichtung zugeführt. Solche Vorrichtungen sind beispielsweise in den Patentschriften WO2017/173477A1, WO2020/011497A1, DE20308513U1 und FR2556273A1 beschrieben.

Aus dem internen Stand der Technik der Anmelderin ist dabei bekannt, dass die Vorformlingzuführung bzw. die Vorformlingsortiereinrichtung hierzu auf einem extra vorgesehenen, gesonderten und erhöhten Podest neben der Maschine zum Herstellen von Kunststoffbehältnissen angeordnet ist. Dies hat dabei den Nachteil, dass die Vorformlingzuführung jeweils in der Außenmontage aufwändig aufgestellt werden muss, wodurch sich viele Fehler an den Schnittstellen bzw. Übergabestellen zu den nachfolgenden Einrichtungen ergeben. Weiterhin hat die Vorformlingsortiereinrichtung aufgrund der erhöhten Aufstellung eine schlechte Zugänglichkeit und ist daher aufwendig in der Wartung, Bedienung und bei der Beseitigung von auftretenden Fehlern.

Der vorliegenden Erfindung liegt daher die Aufgabe zugrunde, die Zugänglichkeit zu derartigen Vorformlingsortiereinrichtungen zu erleichtern und gleichzeitig die gesamte Anlage zum Herstellen von Kunststoffbehältnissen, einschließlich der Vorformlingzuführung auf kleinerem Raum anzuordnen.

Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Vorrichtung zum Behandeln von Kunststoffvorformlingen gerichtet, mit einer Vorformlingsortiereinrichtung aufweisend eine Sortiereinrichtung und eine Staueinrichtung, welche die Kunststoffvorformlinge jeweils entlang eines ersten geradlinigen Transportpfads transportiert, wobei die Sortiereinrichtung dazu geeignet und bestimmt ist die Kunststoffvorformlinge in eine vorgegebene Ausrichtung zu bringen und die Staueinrichtung dazu geeignet und bestimmt ist die Kunststoffvorformlinge geordnet einer stromabwärts der Vorformlingsortiereinrichtung angeordneten Heizeinrichtung zuzuführen, welche die Kunststoffvorformlinge auf eine für eine Blasformung notwendige Temperatur erwärmt, wobei die Heizeinrichtung die Kunststoffvorformlinge entlang eines im Wesentlichen zweiten geradlinigen Transportpfads transportiert und entlang des zweiten geradlinigen Transportpfads eine Vielzahl von stationär angeordneten Heizelementen angeordnet ist.

Erfindungsgemäß sind die Vorformlingsortiereinrichtung und die Heizeinrichtung dabei auf einem gemeinsamen Träger angeordnet.

Mit der erfindungsgemäßen Vorrichtung wird demnach ermöglicht, dass die Vorformlingzuführung bzw. die Vorformlingsortiereinrichtung direkt in der Innenmontage eingerichtet und auch in Betrieb genommen werden kann und die Schnittstellen und Aufwände in der Außenmontage entfallen, da die Vorformlingzuführung bzw. -sortiereinrichtung direkt neben bzw. an der eigentlichen Produktionsline angeordnet ist. Zur Inbetriebnahme sind demnach auch keine Hausanlagen mehr notwendig. Darüber hinaus wird durch die Anordnung der Vorformlingsortiereinrichtung und der Heizeinrichtung auf einem gemeinsamen Träger eine kompakte Aufstellung mit guter Zugänglichkeit erreicht sowie zudem auch deutlich reduzierte Transportkosten, da der Versand mit der Heizeinrichtung möglich ist.

Die Erfindung ist dabei weiterhin auch auf eine Vorrichtung zum Behandeln von Kunststoffvorformlingen gerichtet, mit einer Vorformlingsortiereinrichtung aufweisend eine Sortiereinrichtung und eine Staueinrichtung, welche die Kunststoffvorformlinge jeweils entlang eines ersten geradlinigen Transportpfads transportieren, wobei die Sortiereinrichtung dazu geeignet und bestimmt ist die Kunststoffvorformlinge in eine vorgegebene Ausrichtung zu bringen und die Staueinrichtung dazu geeignet und bestimmt ist die Kunststoffvorformlinge geordnet einer stromabwärts der Vorformlingsortiereinrichtung angeordneten Heizeinrichtung zuzuführen, welche die Kunststoffvorformlinge auf eine für eine Blasformung notwendige Temperatur erwärmt, wobei die Heizeinrichtung die Kunststoffvorformlinge entlang eines im Wesentlichen zweiten geradlinigen Transportpfads transportiert und entlang des zweiten geradlinigen Transportpfads eine Vielzahl von stationär angeordneten Heizelementen angeordnet ist.

Erfindungsgemäß sind die Vorformlingsortiereinrichtung und die Heizeinrichtung dabei parallel zueinander angeordnet. Insbesondere wird daher die Vorformlingsortiereinrichtung bestehend aus Staueinrichtung und Sortiereinrichtung parallel zu der Heizeinrichtung angeordnet und bevorzugt direkt an der Heizeinrichtung befestigt.

Auch mit dieser Vorrichtung wird demnach insbesondere eine kompakte Aufstellung und eine gute Zugänglichkeit zu der Vorformlingsortiereinrichtung erreicht sowie reduzierte Transportkosten, da die Vorformlingsortiereinrichtung gemeinsam mit der Heizeinrichtung versendet werden kann.

Unter im Wesentlichen entlang eines geradlinigen Transportpfads transportiert ist dabei zu verstehen, dass der Transportpfad auch gekrümmte Abschnitte aufweisen kann und insbesondere Abschnitte, in denen der Transportpfad bzw. das Transportmittel über Umlenkräder gelenkt wird. Das Zuführen der Kunststoffvorformlinge an die Heizeinrichtung kann dabei ein direktes Zuführen der Vorformlinge von der Staueinrichtung an die Heizeinrichtung sein, allerdings kann es auch sein, dass zwischen der Staueinrichtung und der Heizeinrichtungen auch noch weitere Einrichtungen wie beispielswiese Transportsterne, Pufferstrecken, oder dergleichen angeordnet sind.

Besonders bevorzugt ist die Vorformlingsortiereinrichtung dabei jedoch parallel zu der Heizeinrichtung angeordnet und mit der Heizeinrichtung auf einem gemeinsamen Träger bzw. auf der gleichen Plattform angeordnet. Durch eine derartige Anordnung der Vorformlingsortiereinrichtung und der Heizeinrichtung wird eine im Vergleich zum Stand der Technik wesentlich kompaktere Anordnung der gesamten Anlage ermöglicht. Aufgrund der räumlich nahen Anordnung der Vorformlingsortiereinrichtung zu der Heizeinrichtung wird zudem auch die Zuführstrecke zum Zuführen der Vorformlinge erheblich verkürzt.

Vorzugsweise verlaufen demnach der Transportpfad der Vorformlingsortiereinrichtung und der Transportpfad der Heizeinrichtung parallel zueinander, wobei weiter bevorzugt auch der Transport der Kunststoffvorformlinge in der Vorformlingsortiereinrichtung und der Heizeinrichtung parallel zueinander erfolgt. Dabei wird durch diese erfindungsgemäße Anordnung der Vorformlingsortiereinrichtung und der Heizeinrichtung auch bevorzugt die Vorformlingzuführung in die Heizeinrichtung integriert und bevorzugt mit der Heizeinrichtung gekoppelt, was wiederum zu einer kompakten Bauweise bei geringerem Platzbedarf führt.

Bei der Sortiereinrichtung und der Staueinrichtung handelt es sich jeweils um einen bestimmten Abschnitt der Transportstrecke der Vorformlingsortiereinrichtung, so dass hier statt von einer Sortiereinrichtung und einer Staueinrichtung auch von einer Sortierstrecke und einer Staustrecke gesprochen werden kann.

Die Sortiereinrichtung ist bevorzugt dazu geeignet und bestimmt die Kunststoffvorformlinge, welche der Vorformlingsortiereinrichtung ungeordnet als Schüttgut zugeführt werden, in eine (vor)bestimmte Ausrichtung zu bringen. Insbesondere handelt es sich dabei um eine Position, welche für den nachfolgenden Behandlungsvorgang, wie beispielsweise einem Erwärmen der Vorformlinge in der Heizeinrichtung notwendig ist. Besonders bevorzugt sollen die Kunststoffvorformlinge dabei derart angeordnet werden, so dass die Mündung bzw. der Mündungsbereich der Vorformlinge nach oben, d.h. vom Erdmittelpunkt weg, gerichtet ist.

Hierzu weist die Sortiereinrichtung bevorzugt zwei zueinander beabstandete Führungen, wie insbesondere Rollen oder Schienen auf, zwischen denen die Vorformlinge geführt werden bzw. entlanggleiten. Dabei ist der Abstand zwischen den Führungen bevorzugt so groß, dass ein Grundkörper der Vorformlinge zwischen diesen hindurchtreten kann, ein Tragring der Vorformlinge jedoch nicht. Bevorzugt liegt der Tragring beim Transport der Vorformlinge auf den Rollen bzw. den Führungen auf. Besonders bevorzugt ist der Abstand zwischen den Rollen oder Schienen einstellbar, so dass dieser an verschiedene Vorformlingtypen angepasst werden kann. Bei den Rollen handelt es sich weiter bevorzugt um angetriebene Rollen, wobei bevorzugt auch die Drehgeschwindigkeit der Rollen einstellbar ist.

Darüber hinaus wäre es auch denkbar, dass die Sortiereinrichtung als Scheibe bzw. Drehscheibe ausgebildet ist, welche die Vorformlinge bevorzugt durch Rotation und die hierdurch entstehenden Fliehkräfte an eine Außenwand drückt und durch geeignete Anordnung von Führungsschienen in die vorgegebene Ausrichtung drängt.

Die Heizeinrichtung weist dabei bevorzugt ein umlaufendes Transportmittel wie beispielsweise Transportbänder oder an dem Transportmittel angeordnete Halteeinrichtungen wie Klammern auf, welche die Kunststoffvorformlinge oberhalb des Tragrings greifen. Die Heizelemente sind besonders bevorzugt stationär angeordnet, so dass die Kunststoffvorformlinge während des Transports an diesen vorbeibewegt und erwärmt werden. Bei diesen Heizelementen handelt es sich dabei bevorzugt um Heizboxen, wie Infrarotstrahler oder Mikrowellenerwärmungseinrichtungen. Denkbar wären darüber hinaus allerdings auch mitfahrende Heizelemente, wie insbesondere Strahlfinger, welche in die Kunststoffvorformlinge eingreifen und gleichzeitig auch als Halteeinrichtungen zum Transportieren der Kunststoffvorformlinge dienen.

Bei einer bevorzugten Ausführungsform erfolgt die Zuführung der Kunststoffvorformlinge von der Vorformlingsortiereinrichtung zu der Heizeinrichtung und insbesondere zu einem zwischen der Vorformlingsortiereinrichtung und der Heizeinrichtung angeordneten Transportstern in horizontaler Richtung. Die Kunststoffvorformlinge werden demnach bevorzugt in der Vorformlingsortiereinrichtung und der Heizeinrichtung in horizontaler Richtung transportiert und besonders bevorzugt parallel zueinander transportiert. Hierdurch wird ein besonders einfacher Aufbau der Vorformlingsortiereinrichtung sowie eine einfache Übergabe zu der Heizeinrichtung ermöglicht.

Bei einer weiteren bevorzugten Ausführungsform ist in der Sortiereinrichtung und/oder der Staueinrichtung wenigstens eine Luftbeaufschlagungseinrichtung vorgesehen, welche dazu geeignet und bestimmt ist, die Kunststoffvorformlinge mittels eines Luftstroms zu transportieren. Die Zuführung der Kunststoffvorformlinge zu der Heizeinrichtung und/oder zu dem zwischen der Vorformlingsortiereinrichtung und der Heizeinrichtung angeordneten Transportstern erfolgt demnach bevorzugt über eine luftunterstützende Zuführung. Durch diesen Lufttransport der Vorformlinge können Reibungsflächen zwischen den Vorformlingen und den Führungen in vorteilhafter Weise reduziert werden und somit Beschädigungen der Vorformline verringert werden.

Die Staueinrichtung ist dabei besonders bevorzugt stromabwärts der Sortiereinrichtung bzw. in Transportrichtung der Kunststoffvorformlinge nach der Sortiereinrichtung angeordnet und bevorzugt dazu geeignet und bestimmt die Kunststoffvorformlinge geordnet der nachfolgenden Heizeinrichtung zuzuführen. Darüber hinaus wird in der Staueinrichtung bevorzugt die Teilung der Kunststoffvorformlinge zueinander verändert und insbesondere verringert. Insbesondere werden die Kunststoffvorformlinge in der Staueinrichtung aufgestaut und berühren sich bevorzugt an ihren Tragringen.

Bei einer bevorzugten Ausführungsform weist die Staueinrichtung zwei angetriebene umlaufende Transportbänder auf, welche parallel zueinander angeordnet sind und welche dazu geeignet und bestimmt sind die Kunststoffvorformlinge zu transportieren. Die Transportbänder sind dabei bevorzugt derart ausgebildet, so dass sie einen Abstand zueinander aufweisen, welcher so groß ist, dass ein Grundkörper der Vorformlinge durch den durch den Abstand zwischen den Transportbändern gebildeten Spalt hindurchtreten kann, ein Tragring der Kunststoffvorformlinge jedoch nicht. Besonders bevorzugt ist dabei auch der Abstand zwischen den Transportbändern einstellbar bzw. veränderbar, so dass Vorformlinge mit unterschiedlichen Grundkörper-Durchmessern transportiert werden können.

Bei den Transportbändern handelt es sich dabei besonders bevorzugt um angetriebene Metallbänder, welche umlaufend um zwei Rollen geführt werden, wobei es sich bei der ersten Rolle bevorzugt um eine Umlenkrolle handelt und bei der zweiten Rolle um eine Antriebsrolle. Die Zuführung der Kunststoffvorformlinge zu der Heizeinrichtung und/oder zu dem zwischen der Vorformlingsortiereinrichtung und der Heizeinrichtung angeordneten Transportstern kann demnach bevorzugt auch über Transportbänder erfolgen.

Vorzugsweise ist die Vorformlingsortiereinrichtung demnach derart ausgebildet, dass die Sortiereinrichtung bzw. Sortierstrecke zwei parallel zueinander angeordnete Rollen aufweist und die Staueinrichtung bzw. Staustrecke Transportbänder. Demnach werden die Kunststoffvorformlinge bevorzugt in der Sortiereinrichtung mit Rollen transportiert und in der Staueinrichtung mit Transportbändern.

Bei einer bevorzugten Ausführungsform ist es jedoch auch denkbar, dass die Staueinrichtung zwei drehbare und parallel zueinander angeordnete Rollen aufweist, welche dazu geeignet und bestimmt sind die Kunststoffvorformlinge zu transportieren.

Bei einer besonders bevorzugten Ausführungsform weist dabei sowohl die Staueinrichtung als auch die Sortiereinrichtung zwei drehbare und parallel zueinander angeordnete Rollen auf, welche dazu geeignet und bestimmt sind die Kunststoffvorformlinge zu transportieren, wobei sich die Rollen der Sortiereinrichtung und die Rollen der Staueinrichtung direkt aneinander anschließen. Vorzugsweise kann demnach die Vorformlingsortiereinrichtung auch derart ausgebildet sein, dass die Sortiereinrichtung bzw. Sortiertrecke und die Staueinrichtung bzw. Staustrecke jeweils zwei parallel zueinander angeordnete Rollen aufweisen, so dass die Kunststoffvorformlinge bevorzugt in der Sortiereinrichtung und der Staueinrichtung mit Rollen transportiert werden. Die Weiterführung der Rollen ist dabei insbesondere vorteilhaft, da hierdurch keine Übergänge zwischen der Transportstrecke der Sortiereinrichtung und der Transportstrecke der Staueinrichtung entstehen, so dass die Übergabe von der Sortiereinrichtung zu der Staueinrichtung vereinfacht wird. Die Rollen der Sortiereinrichtung und die Rollen der Staueinrichtung weisen dabei bevorzugt unterschiedliche Drehgeschwindigkeiten auf, so dass insbesondere der Abstand der Kunststoffvorformlinge in der Staueinrichtung einfach verringert werden kann. Besonders bevorzugt ist dabei die Drehgeschwindigkeit der Rollen jeweils einstellbar bzw. veränderbar.

In einer weiteren bevorzugten Ausführungsform sind die Vorformlingsortiereinrichtung und die Heizeinrichtung in einem gemeinsamen Gehäuse angeordnet. Besonders bevorzugt sind die Vorformlingsortiereinrichtung und die Heizeinrichtung dabei auf einem gemeinsamen Träger angeordnet und innerhalb eines gemeinsamen Gehäuses. Hierdurch wird insbesondere der Aufbau und der Transport der Vorformlingsortiereinrichtung und der Heizeinrichtung weiter vereinfacht.

Bei einer weiteren bevorzugten Ausführungsform ist stromabwärts der Heizeinrichtung eine Blasformmaschine angeordnet, welche die Kunststoffvorformlinge nach der Erwärmung in der Heizeinrichtung zu Kunststoffbehältnissen umformt. Die Kunststoffvorformlinge werden demnach bevorzugt nach der Erwärmung in der Heizeinrichtung der Blasformmaschine zugeführt und durch Beaufschlagung mit einem flüssigen oder gasförmigen Medium innerhalb von Blasstationen zu Kunststoffbehältnissen expandiert.

Bevorzugt handelt es sich bei der Blasformmaschine um eine Streckblasmaschine, was bedeutet, dass die Vorformlinge vor und/oder während der Expansion mittels einer Reckstange in Längsrichtung gedehnt werden. Die Blasstationen weisen dabei jeweils Reckstangen auf, welche in die Kunststoffvorformlinge einführbar sind und die Kunststoffvorformlinge in ihrer Längsrichtung dehnen.

Bei einer vorteilhaften Ausführungsform ist eine Vielzahl von Blasstationen an einem gemeinsamen beweglichen Träger angeordnet. Bei diesem Träger handelt es sich dabei insbesondere um einen drehbaren Träger. Die Blasstationen weisen jeweils eine Blasformeinrichtung auf, welche bevorzugt einen Hohlraum ausbilden, innerhalb dessen die Kunststoffvorformlinge zu den Kunststoffbehältnissen expandierbar sind. Diese Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar, um die Blasformeinrichtungen zu öffnen und zu schließen. Zudem weist der Blasformträger Verriegelungsmechanismen auf, um die Formhälften während des Blasvorgangs gegeneinander zu verriegeln.

Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Die Blasformeinrichtungen werden dabei bevorzugt auch innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasstationen bzw. Umformungsstationen und/oder den Transportpfad der Kunststoffbehältnisse ausgebildet.

Die vorliegende Erfindung ist weiterhin auch auf ein Verfahren zum Behandeln von Kunststoffvorformlingen gerichtet, mit einer Vorformlingsortiereinrichtung aufweisend eine Sortiereinrichtung und eine Staueinrichtung, welche die Kunststoffvorformlinge jeweils entlang eines ersten geradlinigen Transportpfads transportieren, wobei die Sortiereinrichtung dazu geeignet und bestimmt ist die Kunststoffvorformlinge in eine vorgegebene Ausrichtung zu bringen und die Staueinrichtung dazu geeignet und bestimmt ist die Kunststoffvorformlinge geordnet einer stromabwärts der Vorformlingsortiereinrichtung angeordneten Heizeinrichtung zuzuführen, welche die Kunststoffvorformlinge auf eine für eine Blasformung notwendige Temperatur erwärmt, wobei die Heizeinrichtung die Kunststoffvorformlinge entlang eines im Wesentlichen zweiten geradlinigen Transportpfads transportiert und entlang des zweiten geradlinigen Transportpfads eine Vielzahl von stationär angeordneten Heizelementen angeordnet ist.

Erfindungsgemäß werden die Kunststoffvorformlinge in der Vorformlingsortiereinrichtung und der Heizeinrichtung parallel zueinander transportiert und/oder die Vorformlingsortiereinrichtung und die Heizeinrichtung sind auf einem gemeinsamen Träger angeordnet.

Es wird demnach auch verfahrensseitig vorgeschlagen, im Hinblick auf eine kompaktere Anordnung und eine verbesserte Zugänglichkeit zu der Vorformlingsortiereinrichtung, diese gemeinsam mit der Heizeinrichtung auf einem gemeinsamen Träger und insbesondere parallel zu der Heizeinrichtung anzuordnen.

Weitere Vorteile und Ausführungsformen ergeben sich aus den beigefügten Zeichnungen. Darin zeigt:
- Fig. 1: eine erfindungsgemäße Darstellung einer Vorrichtung zum Behandeln von Kunststoffvorformlingen;
- Fig. 2: eine Draufsicht einer erfindungsgemäßen Staueinrichtung; und
- Fig. 3: eine Seitenansicht einer erfindungsgemäßen Staueinrichtung.

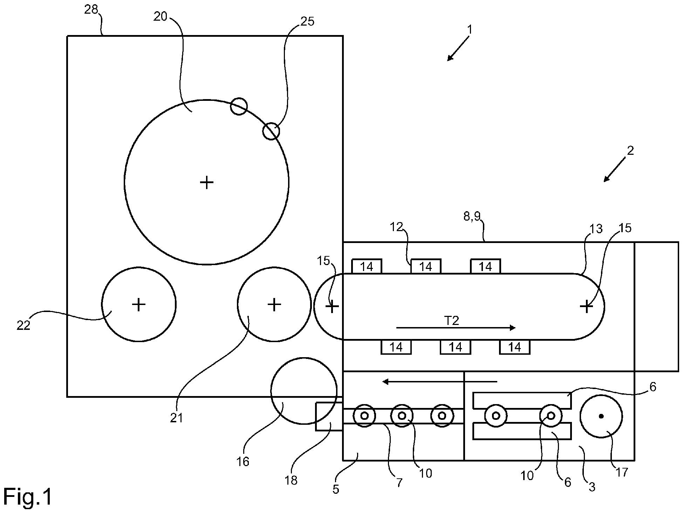

Figur 1 zeigt eine erfindungsgemäße Darstellung einer Vorrichtung 1 zum Behandeln von Kunststoffvorformlingen 10. Die Kunststoffvorformlinge 10 werden dabei über einen Einwurfstern 17 der Vorformlingsortiereinrichtung 2 zugeführt und hier zuerst in der Sortiereinrichtung 3 in eine vorbestimmte Ausrichtung gebracht und anschließend in der Staustrecke 5 in eine vorgegebene Teilung gebracht und über den Transportstern 16 der nachfolgenden Heizeinrichtung 12 zugeführt. In dieser beispielhaften Ausführungsform weist dabei sowohl die Sortiereinrichtung 3 als auch die Staueinrichtung 5 jeweils zwei parallel zueinander angeordnete Rollen 6, 7 auf, zwischen denen die Kunststoffvorformlinge transportiert werden.

Dabei ist erkennbar, dass die erste Transportstrecke T1 der Vorformlingsortiereinrichtung 2 und die zweite Transportstrecke T2 der Heizeinrichtung 12 parallel zueinander angeordnet sind und entlang einer horizontalen Richtung h verlaufen. Die Heizeinrichtung 12 weist dabei ein umlaufendes Transportmittel 13 auf, welches über wenigstens zwei Umlenkpunkte 15 geführt wird. Entlang der Transportstrecke T2 der Heizeinrichtung 12 ist eine Vielzahl von Heizelementen 14 zum Erwärmen der Kunststoffvorformlinge 10 angeordnet. Die Bezugszeichen 8 und 9 kennzeichnen schematisch das gemeinsame Gehäuse (Bezugszeichen 8) innerhalb dessen die Vorformlingsortiereinrichtung 2 und die Heizeinrichtung 12 angeordnet sind bzw. den gemeinsamen Träger (Bezugszeichen 9) auf dem die Vorformlingsortiereinrichtung 2 und die Heizeinrichtung 12 angeordnet sind.

Das Bezugszeichen 18 kennzeichnet eine Einlaufsperre, welche am Ende der Transportstrecke der Staueinrichtung 5 angeordnet ist und den Einlauf bzw. die Übergabe der Kunststoffvorformlinge an den Transportstern 16 bei Bedarf bzw. wenn notwendig sperren kann.

Das Bezugszeichen 20 kennzeichnet eine Blasformmaschine, innerhalb welcher die Kunststoffvorformlinge 10 nach der Erwärmung zu Kunststoffbehältnissen umgeformt werden. Die Blasformmaschine 20 weist dabei eine Vielzahl von Blasformeinrichtungen 25 (hier nur zwei dargestellt) auf, welche entlang eines drehbaren Trägers angeordnet sind. Die Kunststoffvorformlinge 10 werden dabei über einen Zuführstern 21 der Blasformmaschine 20 zugeführt und als umgeformte Behältnisse über einen Abführstern 22 aus der Blasformmaschine 20 abgeführt. Bevorzugt ist die Blasformmaschine 20 dabei innerhalb eines Gehäuses 28 angeordnet, wobei dieses Gehäuse 28 bevorzugt einen Reinraum ausbildet. Das Gehäuses 28 ist demnach bevorzugt derart ausgebildet, so dass es die Blasformmaschine 20 von einer unsterilen Umgebung trennt.

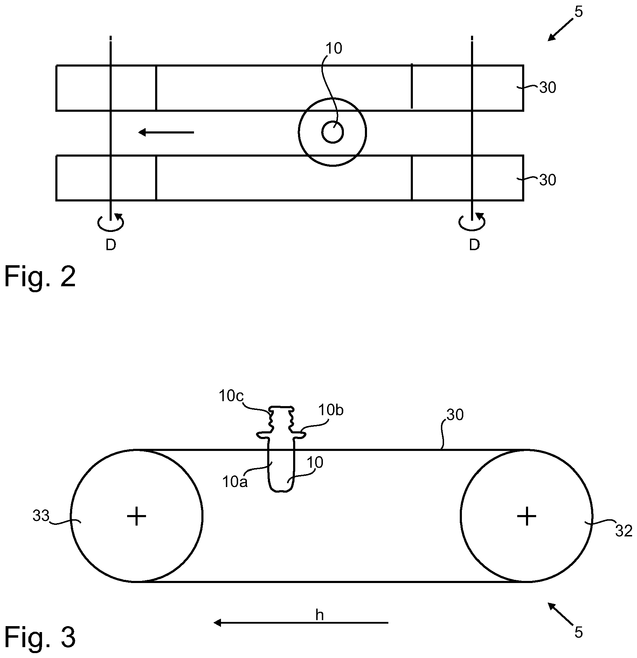

Die Figuren 2 und 3 zeigen eine Draufsicht bzw. eine Seitenansicht der Staueinrichtung 5. Im Gegensatz zu der Ausführungsform gemäß der Figur 1 weist die Staueinrichtung 5 hier zwei parallel zueinander angeordnete und voneinander beabstandete Transportbänder 30 auf, zwischen denen die Kunststoffvorformlinge 10 transportiert und geführt werden. Die Transportbänder 30 werden dabei über eine Umlenkrolle 32 und ein Antriebsrolle 33 geführt. Das Bezugszeichen D in der Figur 2 kennzeichnet dabei die Drehrichtung der Umlenkrolle 32 und der Antriebsrolle 33.

Insbesondere in der Darstellung gemäß der Figur 3 ist dabei erkennbar, dass die Transportbänder 30 derart angeordnet sind, so dass ein Grundkörper 10a der Kunststoffvorformlinge 10 zwischen den Bändern hindurchtreten kann, der Mündungsbereich 10c bzw. der Tragring 10b jedoch nicht. Das Bezugszeichen h kennzeichnet auch hier wiederum die horizontale Richtung entlang welcher die Kunststoffvorformlinge 10 transportiert werden.

### Bezugszeichenliste

- 1: Vorrichtung
- 2: Vorformlingsortiereinrichtung
- 3: Sortiereinrichtung
- 5: Staueinrichtung
- 6: Rollen
- 7: Rollen
- 8: Gehäuse
- 9: Träger
- 10: Kunststoffvorformlinge
- 10a: Grundkörper
- 10b: Tragring
- 10c: Mündungsbereich
- 12: Heizeinrichtung
- 13: Transportmittel
- 14: Heizelemente
- 15: Umlenkpunkt
- 16: Transportstern
- 17: Einwurfstern
- 18: Einlaufsperre
- 20: Blasformmaschine
- 21: Zuführstern
- 22: Abführstern
- 25: Blasformeinrichtung
- 28: Gehäuse
- 30: Transportband
- 32: Umlenkrolle
- 33: Antriebsrolle

- T1: erster geradliniger Transportpfad
- T2: zweiter geradliniger Transportpfad
- h: horizontale Richtung
- D: Drehrichtung

## Patentansprüche

1. Vorrichtung (1) zum Behandeln von Kunststoffvorformlingen (10) mit einer Vorformlingsortiereinrichtung (2) aufweisend eine Sortiereinrichtung (3) und eine Staueinrichtung (5), welche die Kunststoffvorformlinge (10) jeweils entlang eines ersten geradlinigen Transportpfads (T1) transportieren, wobei die Sortiereinrichtung (3) dazu geeignet und bestimmt ist die Kunststoffvorformlinge (10) in eine vorgegebene Ausrichtung zu bringen und die Staueinrichtung (5) dazu geeignet und bestimmt ist die Kunststoffvorformlinge (10) geordnet einer stromabwärts der Vorformlingsortiereinrichtung (2) angeordneten Heizeinrichtung (12) zuzuführen, welche die Kunststoffvorformlinge (10) auf eine für eine Blasformung notwendige Temperatur erwärmt, wobei die Heizeinrichtung (12) die Kunststoffvorformlinge (10) entlang eines im Wesentlichen zweiten geradlinigen Transportpfads (T2) transportiert und entlang des zweiten geradlinigen Transportpfads (T2) eine Vielzahl von stationär angeordneten Heizelementen (14) angeordnet ist, und
die Vorformlingsortiereinrichtung (2) und die Heizeinrichtung (12) parallel zueinander angeordnet sind,
**dadurch gekennzeichnet, dass**
in der Sortiereinrichtung (3) und/oder der Staueinrichtung (5) wenigstens eine Luftbeaufschlagungseinrichtung vorgesehen ist, welche dazu geeignet und bestimmt ist, die Kunststoffvorformlinge (10) mittels eines Luftstroms zu transportieren.

2. Vorrichtung (1) nach dem vorhergehenden Anspruch,
**dadurch gekennzeichnet, dass**
die Zuführung der Kunststoffvorformlinge (10) von der Vorformlingsortiereinrichtung (2) zu der Heizeinrichtung (12) und insbesondere zu einem zwischen der Vorformlingsortiereinrichtung (2) und der Heizeinrichtung (12) angeordneten Transportstern (16) in horizontaler Richtung (h) erfolgt.

3. Vorrichtung (1) nach wenigstens einem der vorhergehenden Ansprüche,
**dadurch gekennzeichnet, dass**
die Staueinrichtung (5) zwei angetriebene umlaufende Transportbänder (30) aufweist, welche parallel zueinander angeordnet sind und welche dazu geeignet und bestimmt sind die Kunststoffvorformlinge (10) zu transportieren.

4. Vorrichtung (1) nach wenigstens einem der vorhergehenden Ansprüche,
**dadurch gekennzeichnet, dass**
die Staueinrichtung (5) zwei drehbare und parallel zueinander angeordnete Rollen (7) aufweist, welche dazu geeignet und bestimmt sind die Kunststoffvorformlinge (10) zu transportieren.

5. Vorrichtung (1) nach wenigstens einem der vorhergehenden Ansprüche,
**dadurch gekennzeichnet, dass**
sowohl die Staueinrichtung (5) als auch die Sortiereinrichtung (3) zwei drehbare und parallel zueinander angeordnete Rollen (6, 7) aufweist, welche dazu geeignet und bestimmt sind die Kunststoffvorformlinge (10) zu transportieren, wobei sich die Rollen (6) der Sortiereinrichtung (3) und die Rollen (7) der Staueinrichtung (5) direkt aneinander anschließen.

6. Vorrichtung (1) nach wenigstens einem der vorhergehenden Ansprüche,
**dadurch gekennzeichnet, dass**
die Vorformlingsortiereinrichtung (2) und die Heizeinrichtung (12) in einem gemeinsamen Gehäuse (8) angeordnet sind.

7. Vorrichtung (1) nach wenigstens einem der vorhergehenden Ansprüche,
**dadurch gekennzeichnet, dass**
stromabwärts der Heizeinrichtung (12) eine Blasformmaschine (20) angeordnet ist, welche die Kunststoffvorformlinge (10) nach der Erwärmung in der Heizeinrichtung (12) zu Kunststoffbehältnissen umformt.

## Claims

1. Apparatus (1) for treating plastic preforms (10) with a preform sorting device (2) comprising a sorting device (3) and a damming device (5) which transports the plastic preforms (10) in each case along a first rectilinear transport path (T1), wherein the sorting device (3) is suitable and intended to bring the plastic preforms (10) into a predetermined orientation and the damming device (5) is suitable and intended to feed the plastic preforms (10) in an ordered manner to a heating device (12) arranged downstream of the preform sorting device (2), which heats the plastic preforms (10) to a temperature necessary for blow moulding, wherein the heating device (12) transports the plastic preforms (10) along a second substantially rectilinear transport path (T2) and a plurality of heating elements (14) arranged in a stationary manner is arranged along the second rectilinear transport path (T2), and
the preform sorting device (2) and the heating device (12) are arranged on a common carrier (9),
**characterised in that**
at least one air application device is provided in the sorting device (2) and/or the damming device (5), which air application device is suitable and intended to transport the plastic preforms (10) by an air stream.

2. Apparatus (1) according to the preceding claim,
**characterised in that**
the plastic preforms (10) are fed from the preform sorting device (2) to the heating device (12) and in particular to a transport starwheel (16) arranged between the preform sorting device (2) and the heating device (12) in horizontal direction (h).

3. Apparatus (1) according to at least one of the preceding claims,
**characterised in that**
the damming device (5) has two driven circumferential conveyor belts (30) which are arranged parallel to each other and which are suitable and intended for transporting the plastic preforms (10).

4. Apparatus (1) according to at least one of the preceding claims,
**characterised in that**
the damming device (5) has two rotatable rollers (7) arranged parallel to each other, which are suitable and intended for transporting the plastic preforms (10).

5. Apparatus (1) according to at least one of the preceding claims,
**characterised in that**
both the damming device (5) and the sorting device (3) have two rotatable rollers (6, 7) arranged parallel to one another, which are suitable and intended for transporting the plastic preforms (10), wherein the rollers (6) of the sorting device (3) and the rollers (7) of the damming device (5) being directly adjacent to one another.

6. Apparatus (1) according to at least one of the preceding claims,
**characterised in that**
the preform sorting device (2) and the heating device (12) are arranged in a common housing (8).

7. Apparatus (1) according to at least one of the preceding claims,
**characterised in that**
downstream of the heating device (12), a blow moulding machine (20) is arranged which forms the plastic preforms (10) into plastic containers after heating in the heating device (12).

## Revendications

1. Dispositif (1) de traitement de préformes en matière plastique (10) avec un système de tri de préforme (2) présentant un système de tri (3) et un système de stockage (5), lequel transporte les préformes en matière plastique (10) respectivement le long d'un premier chemin de transport (T1) rectiligne, dans lequel le système de tri (3) est adapté pour et se destine à amener les préformes en matière plastique (10) dans une orientation prédéfinie et le système de stockage (5) est adapté pour et se destine à délivrer les préformes en matière plastique (10) de manière ordonnée à un système de chauffage (12) disposé en aval du système de tri de préforme (2), lequel chauffe les préformes en matière plastique (10) à une température nécessaire pour un moulage par soufflage, dans lequel le système de chauffage (12) transporte les préformes en matière plastique (10) le long d'un deuxième chemin de transport (T2) sensiblement rectiligne et une pluralité d'éléments chauffants (14) disposés de manière stationnaire est disposée le long du deuxième chemin de transport (T2) rectiligne, et
le système de tri de préforme (2) et le système de chauffage (12) sont disposés parallèlement l'un à l'autre,
**caractérisé en ce que**
dans le système de tri (3) et/ou le système de stockage (5) au moins un dispositif d'alimentation en air est prévu, qui est adapté pour et se destine à transporter les les préformes en matière plastique (10) au moyen d'un flux d'air.

2. Dispositif (1) selon la revendication précédente,
**caractérisé en ce que**
la livraison des préformes en matière plastique (10) par le système de tri de préforme (2) au système de chauffage (12) et en particulier à une étoile de transport (16) disposée entre le système de tri de préforme (2) et le système de chauffage (12) a lieu dans une direction horizontale (h).

3. Dispositif (1) selon au moins l'une quelconque des revendications précédentes,
**caractérisé en ce que**
le système de stockage (5) présente deux bandes de transport (30) entraînées circulant en périphérie, lesquelles sont disposées de manière parallèle l'une par rapport à l'autre et lesquelles sont adaptées pour et se destinent à transporter les préformes en matière plastique (10).

4. Dispositif (1) selon au moins l'une quelconque des revendications précédentes,
**caractérisé en ce que**
le système de stockage (5) présente deux rouleaux (7) rotatifs et disposés de manière parallèle l'un par rapport à l'autre, lesquels sont adaptés pour et se destinent à transporter les préformes en matière plastique (10).

5. Dispositif (1) selon au moins l'une quelconque des revendications précédentes,
**caractérisé en ce que**
à la fois le système de stockage (5) et le système de tri (3) présentent deux rouleaux (6, 7) rotatifs et disposés de manière parallèle l'un par rapport à l'autre, lesquels sont adaptés pour et se destinent à transporter les préformes en matière plastique (10), dans lequel les rouleaux (6) du système de tri (3) et les rouleaux (7) du système de stockage (5) se situent directement dans le prolongement les uns des autres.

6. Dispositif (1) selon au moins l'une quelconque des revendications précédentes,
**caractérisé en ce que**
le système de tri de préforme (2) et le système de chauffage (12) sont disposés dans un boîtier commun (8).

7. Dispositif (1) selon au moins l'une quelconque des revendications précédentes,
**caractérisé en ce que**
est disposée, en aval du système de chauffage (12), une machine de moulage par soufflage (20), laquelle met en forme les préformes en matière plastique (10) en récipients en matière plastique après le chauffage dans le système de chauffage (12).
